# EUROPÄISCHE PATENTSCHRIFT

(11) **EP 0 601 297 B1**
(45) Veröffentlichungstag und Bekanntmachung des Hinweises auf die Patenterteilung: **17.04.1996**
(21) Anmeldenummer: 93115934.7
(22) Anmeldetag: 02.10.1993
(51) Int. Cl.: B01F 3/04, B01F 7/00, B66F 1/02, F16B 7/14, F16B 7/16

(54) **An einer Führungseinrichtung absenkbare Umwälzeinrichtung**
Submersible stirring device on a guiding means
Remueur submersible sur un dispositif de guidage

(30) Priorität: 11.12.1992 DE 4241782
(43) Veröffentlichungstag der Anmeldung: 15.06.1994
(73) Patentinhaber: KSB Aktiengesellschaft, D-67227 Frankenthal (DE)
(72) Erfinder: Pretzschel, Jochen, D-91126 Schwabach (DE)

(56) Entgegenhaltungen:
- EP-A- 0 107 406
- EP-A- 0 183 938
- CH-A- 665 568
- DE-A- 4 131 691
- DE-C- 4 015 478
- GB-A- 182 475
- US-A- 4 431 597
- US-A- 5 007 608

## Beschreibung

Gegenstand der Erfindung ist ein in ein Becken mit feststoffbeladener Flüssigkeit absenkbares, aus einem Tragrahmen und einer daran befestigten Umwälzeinrichtung bestehendes Aggregat, das mittels einer Hebevorrichtung an einem im Becken angeordneten Führungsrohr rechteckigen Querschnitts auf- und abwärts bewegbar ist, wobei am Tragrahmen befestigte, auf den Außenflächen des Führungsrohres abwälzende Rollen der erleichterten Bewegung des Aggregates dienen, welches in der Betriebsstellung arretiert wird und in Kontakt mit dem Führungsrohr verbleibt,
Durch die DE-PS 40 15 478 ist eine Aufhängevorrichtung für ein Tauchmotor-Rührwerk bekannt, welche aus einem dort als Tragsäule bezeichneten Führungsrohr und einem Tragrahmen besteht, der aus einer auf dem Führungsrohr verfahrbar geführten Befestigungseinrichtung und einer Kupplung zwischen der Befestigungseinrichtung und dem Tauchmotor-Rührwerk besteht. Das Tauchmotor-Rührwerk wird etwa in der Ebene seines Schwerpunktes durch eine Schelle gehalten, welche in ihrer Mitte eine Öse für den Haken einer Hebevorrichtung besitzt. Innerhalb des Tragrahmens sind vier um je 90° zueinander versetzt angeordnete Rollenpaare vorgesehen, die an den vier Außenflächen des Führungsrohres anliegen. Die Rollen sollen eine Höhenverstellung des aus Tragrahmen und Rührwerk bestehenden Aggregates erleichtern. Durch eine im Tragrahmen angeordnete, gegen das Führungsrohr zu verspannende Feststellschraube kann der Tragrahmen arretiert werden.

Während des Betriebes des in einem Becken angeordneten, dessen Inhalt umwälzenden Rührwerkes bleibt der Kontakt der Rollen mit dem Führungsrohr erhalten; im Anlagebereich der Rollen ergibt sich also eine Linienberührung mit einer relativ hohen Flächenpressung. Da vom laufenden Aggregat zwangsläufig Schwingungen ausgeübt werden, kommt es zu starken Verschleißerscheinungen an den Rollen und am Führungsrohr.

Der Erfindung liegt die Aufgabe zugrunde, ein Aggregat der eingangs genannten Art zu schaffen, bei dem sowohl eine leichte Führung während des Hebe- und Senkvorganges als auch ein verschleißarmer Kontakt zwischen Führungsrohr und Aggregat während des Betriebes der Umwälzeinrichtung gegeben sind.

Die gestellte Aufgabe wird erfindungsgemäß durch die im kennzeichnenden Teil des Anspruches 1 genannten Merkmale gelöst.

Durch die erfindungsgemäße Lösung wird erreicht, daß die Rollen nur dann mit den Außenflächen des Führungsrohres in Kontakt stehen, wenn das Gewicht des Aggregates von der Hebevorrichtung aufgenommen wird. Dies ist während des Hebe- und des Senkvorganges des Aggregates der Fall. In der Betriebsstellung, wenn das Gewicht des Aggregates über den Tragrahmen auf das Führungsrohr wirkt und damit das Aggregat abgestützt wird, liegen dagegen die im Vergleich mit der Linienberührung von Rollen wesentlich größeren Anlageflächen des Tragrahmens an den Außenflächen des Führungsrohres an und bewirken eine geringe Flächenpressung.

Die Unteransprüche nennen vorteilhafte Ausgestaltungen der Erfindung.

Anhand eines Ausführungsbeispiels wird die Erfindung näher erläutert. Die Zeichnung zeigt in
- Fig. 1: eine schematisierte Darstellung eines erfindungsgemäßen Aggregates in der Betriebsstellung, und in
- Fig. 2: als Ausschnitt den mit dem Führungsrohr in Kontakt stehenden Teil des Tragrahmens in einer für das Heben und Senken verschwenkten Stellung.

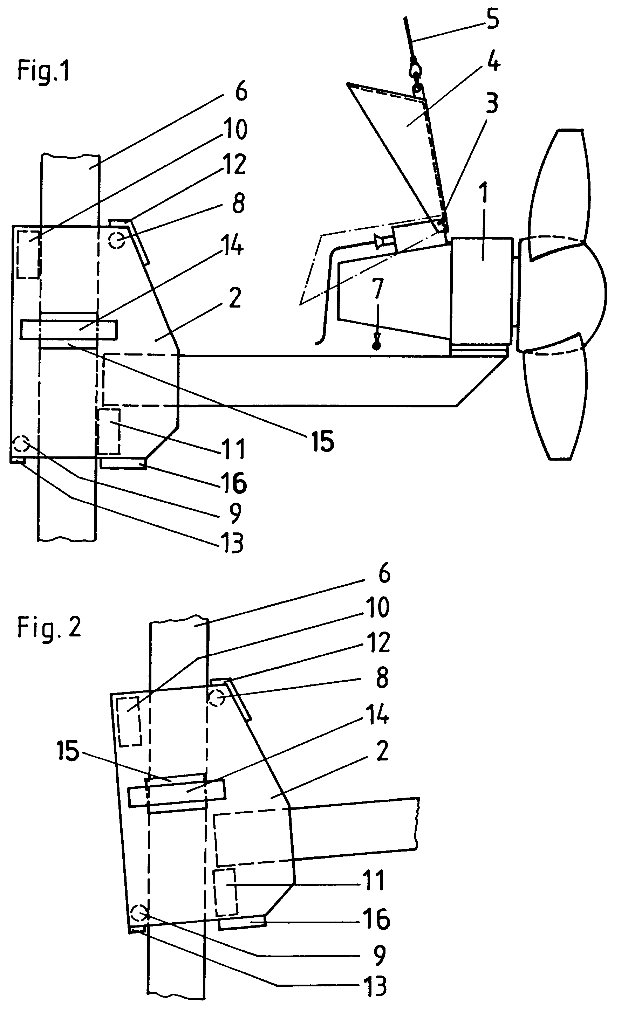

Das Aggregat besteht aus einer Umwälzeinrichtung (1) und einem Tragrahmen (2). Für das Heben und Senken mittels einer Hebevorrichtung besitzt das Aggregat einen Angriffspunkt (3), an dem ein Anker (4) schwenkbar befestigt ist. Der Anker (4) wiederum ist über einen Schäkel mit einem Zugseil (5) verbunden. Bei entspanntem Zugseil (5) liegt der Anker (4) auf der Umwälzeinrichtung (1) auf und schützt so an der Oberfläche der Umwälzeinrichtung (1) befindliche Teile, wie ein Elektrokabel und eine Gehäuseeinführung des Elektrokabels in die Umwälzeinrichtung (1). Die strichpunktierte Linie in der Fig. 1 zeigt diese Stellung des Ankers (4). Mit einem Straffen des Zugseils (5) wird der Anker (4) hochgeklappt, das Aggregat ist nun durch die Hebevorrichtung auf einem Führungsrohr (6) auf- und abwärts bewegbar.

Anstelle des Ankers (4) könnten auch zwei fest mit der Umwälzeinrichtung (1) verbundene dreieckige Blechplatten vorgesehen werden, die das Elektrokabel und den Kabelanschluß der Umwälzeinrichtung (1) zwischen sich einschließen. Die Blechplatten könnten an ihren zusammengeführten oberen, Spitzen Enden den Angriffspunkt für die Hebevorrichtung tragen.

Um der von der Umwälzeinrichtung (1) erzeugten Strömung möglichst wenig Widerstand zu bieten, sind die zur Verbindung der Hebevorrichtung mit dem Aggregat dienenden Mittel, der Anker (4) bzw. die - hier nicht dargestellten - Blechplatten, strömungsgünstig gestaltet.

Durch einen Pfeil (7) wird der Lastschwerpunkt des Aggregates angedeutet. Innerhalb des Tragrahmens (2) sind Rollen (8, 9) angeordnet. Die Rollen (8, 9) können jeweils als einzelne, über die gesamte Breite des Tragrahmens (2) reichende Rollen oder als Paar zweier Rollen ausgebildet sein, die einen freien Raum in ihrer Mitte belassen.

Gegenüber den Rollen (8, 9) sind aus einem gummielastischem Material bestehende Anlageplatten (10, 11) im Tragrahmen (2) vorgesehen. Oberhalb der oberen Rolle (8) und unterhalb der unteren Rolle (9) ist jeweils ein als Quersteg ausgebildeter Abstreifer (12, 13) vorgesehen, der während der Hebe- und Senkbewegung des Aggregates die ihm zugewandte Außenfläche des Führungsrohres (6) von anhaftendem Schmutz befreit. Die Abstreifer (12, 13) sind gegebenenfalls mit einem verschleißfesten Kunststoff belegt, wodurch ihr Abstand zum Führungsrohr (6) noch geringer gehalten werden kann.

Auf der den Abstreifern (12, 13) jeweils gegenüberliegenden Seite übernehmen die Anlageplatten (10, 11) eine Abstreiferfunktion.

Die Befestigung des Führungsrohres (6) kann in bekannter Weise am Rand, an der Wand und/oder am Boden des Beckens erfolgen. Sollten in dem vom Tragrahmen (2) während des Absenkens und Hebens überfahrenen Bereich ein oder mehrere Stege einer Wandbefestigung angeordnet sein, so müssen die der Beckenwand zugewandten Rollen (9), Anlageplatten (10) und Abstreifer (13) so geteilt sein, daß jeweils zwischen ihren paarweise vorhandenen Elementen eine Öffnung für die Stege verbleibt.

Der Tragrahmen (2) besitzt noch zwei seitlich angeordnete, jeweils von einem Bügel (14) elastisch gehalterte und nach dem Entfernen des Bügels (14) aus dem Tragrahmen (2) entnehmbare Gleitplatten (15) aus Kunststoff, welche die seitlich wirkenden Kräfte großflächig am Führungsrohr (6) abstützen.

Schließlich ist an der Unterseite des Tragrahmens (2) eine Auflage (16) aus einem elastischen, schwingungszehrenden Material vorgesehen. Bei der in der Fig. 1 dargestellten Betriebsstellung des Aggregates mit entlastetem Zugseil (5) sitzt die Auflage (16) auf einem dafür vorgesehenen, hier nicht dargestellten Absatz auf. Dies hat zur Folge, daß das vom Gewicht des Aggregates erzeugte Moment die Anlageplatten (10, 11) gegen die Außenflächen des Führungsrohres (6) drückt und die Rollen (8, 9) von den Außenflächen des Führungsrohres (6) abhebt.

Aufgrund der elastischen Anordnung der Gleitplatten (15) durch die Bügel (14) und der Verwendung von elastischem, schwingungszehrendem Material für die Anlageplatten (10, 11) und die Auflage (16) besitzt das Aggregat in seiner Betriebsstellung eine die Übertragung von Schwingungen weitgehend vermeidende Verbindung mit dem Führungsrohr (6).

Wird das Gewicht des Aggregates über den Anker (4) und das Zugseil (5) von der Hebevorrichtung aufgenommen, so erfolgt ein Verschwenken des Aggregates um seinen Schwerpunkt. Die Fig. 2 zeigt die nach dem Verschwenken eingenommene Stellung des Tragrahmens (2). Die Anlageplatten (10, 11) sind nun von den Außenflächen des Führungsrohres (6) abgehoben, während die Rollen (8, 9) dort zur Anlage kommen. Das Aggregat kann jetzt mit auf den Außenflächen des Führungsrohres abwälzenden Rollen (8, 9) leicht gehoben oder gesenkt werden. Während des Hebe- oder Senkvorganges wird auf der Außenfläche des Führungsrohres (6) sitzender Schmutz von den Abstreifern (12, 13) und den dem Führungsrohr (6) zugewandten Kanten der Anlageplatten (10, 11) abgetragen.

Um auch im Notfall, also beispielsweise bei einem Reißen des Zugseiles (5), noch ein Heben des Aggregates bewerkstelligen zu können, besitzt der obere Abstreifer (12) eine nach unten reichende stabile Fortsetzung. Diese kann als Aufnahme eines zwangsweise am Führungsrohr (6) geführten Kipp- oder Gabellasthakens dienen.

## Patentansprüche

1. In ein Becken mit feststoffbeladener Flüssigkeit absenkbares, aus einem Tragrahmen (2) und einer daran befestigten Umwälzeinrichtung (1) bestehendes Aggregat, das mittels einer Hebevorrichtung an einem im Becken angeordneten Führungsrohr (6) rechteckigen Querschnitts auf- und abwärts bewegbar ist, wobei am Tragrahmen (2) befestigte, auf den Außenflächen des Führungsrohres (6) abwälzende Rollen (8, 9) der erleichterten Bewegung des Aggregates dienen, welches in der Betriebsstellung arretiert wird und in Kontakt mit dem Führungsrohr (6) verbleibt, **dadurch gekennzeichnet,**
- daß der Angriffspunkt (3) für die Hebevorrichtung vom Lastschwerpunkt (7) des Aggregates aus in Richtung der Umwälzeinrichtung (1) verschoben ist,
- daß, von der Umwälzeinrichtung (1) aus gesehen und bezogen auf das Führungsrohr (6), Rollen (8, 9) nur auf der Vorder- und der Rückseite angeordnet sind,
- daß die Rollen (8, 9) erst nach einem Verschwenken des von der Hebevorrichtung getragenen Aggregates auf den Außenflächen des Führungsrohres (6) zur Anlage bringbar sind, und
- daß der Tragrahmen (2) Anlageflächen besitzt, die in der Betriebsstellung des Aggregates durch das vom Gewicht des arretierten Aggregates erzeugte Moment gegen die Außenflächen des Führungsrohres (6) gedrückt werden.

2. Aggregat nach Anspruch 1, gekennzeichnet durch auswechselbar im Tragrahmen (2) angeordnete, die Anlageflächen bildende Anlageplatten (10, 11).

3. Aggregat nach Anspruch 2, dadurch gekennzeichnet, daß die Anlageplatten (10, 11) beidseitig mit Anlageflächen versehen und wendbar im Tragrahmen (2) angeordnet sind.

4. Aggregat nach Anspruch 2, dadurch gekennzeichnet, daß die Anlageplatten (10, 11) aus einem elastischen, schwingungszehrenden Werkstoff bestehen.

5. Aggregat nach Anspruch 1, gekennzeichnet durch eine am Tragrahmen (2) angeordnete, der Arretierung in der Betriebsstellung des Aggregates dienende Auflage (16) aus einem elastischen, schwingungszehrenden Material.

6. Aggregat nach Anspruch 1, gekennzeichnet durch einen oder mehrere am Tragrahmen (2) befestigte Abstreifer (12, 13) zum Reinigen der mit den Rollen (8, 9) zusammenwirkenden Außenflächen des Führungsrohres (6).

7. Aggregat nach Anspruch 6, dadurch gekennzeichnet, daß die Abstreifer (12, 13) mit einem verschleißfesten Kunststoff belegt sind.

8. Aggregat nach den Ansprüchen 1, 2 und 6, dadurch gekennzeichnet, daß die der Beckenwand zugewandten Rollen (9), Anlageplatten (10) und Abstreifer (13) so geteilt sind, daß jeweils zwischen ihren paarweise vorhandenen Elementen eine Öffnung für am Führungsrohr (6) angeordnete Stege einer Wandbefestigung verbleibt.

9. Aggregat nach Anspruch 1, gekennzeichnet durch einen an der Umwälzeinrichtung (1) angeordneten Angriffspunkt (3) für die Hebevorrichtung.

10. Aggregat nach Anspruch 9, gekennzeichnet durch zwei fest mit der Umwälzeinrichtung (1) verbundene, das Elektrokabel und den Kabelanschluß der Umwälzeinrichtung (1) zwischen sich einschließende dreieckige Blechplatten, die an ihren oberen, spitzen Enden zusammengeführt sind und die dort den Angriffspunkt für die Hebevorrichtung besitzen.

11. Aggregat nach Anspruch 9, gekennzeichnet durch einen schwenkbar im Angriffspunkt (3) angeordneten Anker (4), welcher in einem von der Hebevorrichtung entlasteten Zustand oberhalb des Elektrokabels und des Kabelanschlusses der Umwälzeinrichtung (1) zur Auflage kommt.

12. Aggregat nach Anspruch 6, gekennzeichnet durch einen oberen Abstreifer (12), der eine nach unten reichende stabile Fortsetzung zur Aufnahme eines zwangsweise am Führungsrohr (6) geführten Kipp- oder Gabellasthakens bildet.

13. Aggregat nach Anspruch 1, gekennzeichnet durch seitlich im Tragrahmen (2) elastisch angeordnete Gleitplatten (15).

## Claims

1. An assembly which is adapted to be lowered into a basin containing liquid charged with solids, comprising a support frame (2) and a circulating means (1) attached thereto, such assembly being able to be moved upward and downward by means of a lifting device on a guide tube (6) which is arranged in the basin and has a rectangular cross section, rollers (8 and 9) running on the outer surfaces of the guide tube (6) and attached to the support frame (2) and serving to facilitate movement of the assembly, which is arrested in the operational position and remains in contact with the guide tube (6), characterized in that
- the point (3) of engagement for the lifting device is displaced starting from the center (7) of gravity toward the circulating means (1),
- in that, as seen from the circulating means (1), and related to the guide tube (6) rollers (8 and 9) are only arranged on the front and rear sides,
- in that rollers (8 and 9) are only able to be brought into engagement with the outer surfaces of the guide tube (6) after pivoting of the assembly, supported by the lifting device, and
- in that the support frame (2) possesses engagement surfaces, which in the operational position of the assembly are thrust by the moment produced by the weight of the arrested assembly against the outer surfaces of the guide tube (6).

2. The assembly as claimed in claim 1, characterized by engagement plates (10 and 11) constituting the engagement surfaces and arranged in a replaceable manner inside the support frame (2).

3. The assembly as claimed in claim 2, characterized in that the engagement plates (10 and 11) are provided on either side with engagement surfaces and are arranged in the support frame (2) so that they may be turned around.

4. The assembly as claimed in claim 2, characterized in that the engagement plates (10 and 11) consist of an elastic, material adapted to absorb vibrations.

5. The assembly as claimed in claim 1, characterized by a ledge (16) of an elastic material adapted to absorb vibrations serving for such arresting action in the operational position of the assembly and arranged on the support frame (2).

6. The assembly as claimed in claim 1, characterized by one or more strippers (12 and 13) secured to the support frame (2) for cleaning the outer surfaces of the guide tube (6) cooperating with the rollers (8 and 9).

7. The assembly as claimed in claim 6, characterized in that the strippers (12 and 13) are armed with a wear resistant plastic.

8. The assembly as claimed in any one of the claims 1, 2 and 6, characterized in that the rollers (9) adjacent to the wall of the basin, the engagement plates (10) and the strippers (13) are so divided that between their elements present in pairs an opening remains for ribs, arranged on the guide tube (6), of a wall attachment means.

9. The assembly as claimed in claim 1, characterized by an engagement point (3) on the circulating means (1) for the lifting device.

10. The assembly as claimed in claim 9, characterized by two triangular sheet metal plates connected permanently with the circulating device (1) and enclosing the electrical cable and the cable connection of the circulating device (1) between them, which plates are brought together at their upper pointed ends and possess the point of engagement for the lifting device there.

11. The assembly as claimed in claim 9, characterized by a tie bolt (4) arranged pivotally at the point (3) of engagement and which in a condition disengaged from the lifting device comes into engagement above the electrical cable and the cable connection of the circulating means (1).

12. The assembly as claimed in claim 6, characterized by an upper stripper (12) which possesses a downwardly extending sturdy extension to receive a rocking or forked load hook positively guided on the guide tube (6).

13. The assembly as claimed in claim 1, characterized by sliding plates (15) arranged elastically and to the side in the support frame (2).

## Revendications

1. Agrégat à déplacement vers le bas dans un bassin contenant un liquide renfermant des matières solides, comprenant un châssis porteur (2) et un dispositif de circulation (1) fixé sur ce dernier, pouvant être monté et descendu à l'aide d'un dispositif de levage vers un tuyau de guidage (6) de section rectangulaire placé dans le bassin, dans lequel des rouleaux (8, 9) fixés au châssis porteur (2), refoulant vers le bas sur les surfaces extérieures du tuyau de guidage (6), servent à faciliter le mouvement de l'agrégat, lequel est bloqué en position de marche et reste en contact avec le tuyau de guidage (6),
**caractérisé** en ce
- que le point d'application (3) pour le dispositif de levage est déplacé en direction du dispositif de circulation (1) à partir du centre de gravité (7) de l'agrégat,
- que, vu du dispositif de circulation (1) et par rapport au tuyau de guidage (6), des rouleaux (8, 9) ne sont placés que sur la face antérieure et postérieure,
- que les rouleaux (8, 9) ne peuvent être accollés aux surfaces extérieures du tuyau de guidage (6) qu'après rotation de l'agrégat porté par le dispositif de levage, et
- que le châssis porteur (2) possède des surface d'accolement qui, en position de marche de l'agrégat, peuvent être pressées contre les surfaces extérieures du tuyau de guidage (6) par le moment créé par le poids de l'agrégat bloqué.

2. Agrégat selon la revendication 1 caractérisé par des plaques d'accollement (10, 11) interchangeables, placées dans le châssis porteur (2) et formant les surfaces d'accollement.

3. Agrégat selon la revendication 2 caractérisé par le fait que les plaques d'accollement (10, 11) sont munies des deux côtés de surfaces d'accollement et placées dans le châssis porteur (2) de manière à pouvoir être retournées.

4. Agrégat selon la revendication 2 caractérisé par le fait que les plaques d'accollement (10, 11) sont fabriquées dans un matériau élastique et absorbant les vibrations.

5. Agrégat selon la revendication 1 caractérisé par un revêtement (16) placé sur le chassis porteur (2), servant au bloquage lorsque l'agrégat est en position de marche et construit dans un matériau élastique et absorbant les vibrations.

6. Agrégat selon la revendication 1 caractérisé par une ou plusieurs racles (12, 13) fixées sur le chassis porteur (2) pour le nettoyage des surfaces extérieures du tuyau de guidage (6) agissant avec les rouleaux (8, 9).

7. Agrégat selon la revendication 6 caractérisé par le fait que les racles (12, 13) sont recouvertes d'une matière plastique résistante à l'usure.

8. Agrégat selon les revendications 1, 2 et 6 caractérisé en ce que les rouleaux (9), les plaques d'accollement (10) et les racles (13) placés du côté de la paroi du bassin sont divisés de telle manière qu'une ouverture est maintenue, entre leurs éléments ordonnés par paires, pour des pontets d'une fixation de la paroi placés sur le tuyau de guidage (6).

9. Agrégat selon la revendication 1 caractérisé par un point d'application (3) pour le dispositif de levage placé sur le dispositif de circulation (1).

10. Agrégat selon la revendication 9 caractérisé par deux plaques de tôles triangulaires liées fixement avec le dispositif de circulation (1), renfermant entre elles le câble électrique et le branchement du câble du dispositif de circulation (1), plaques de tôle qui sont reliées à leurs extrêmités supérieures pointues et qui possèdent à cet endroit le point d'application pour le dispositif de levage.

11. Agrégat selon la revendication 9 caractérisé par une ancre (4) pivotable placée dans le point d'application (3), ancre qui s'accolle dans un état allégé du dispositif de levage au-dessus du câble électrique et du raccordement du câble du dispositif de circulation (1).

12. Agrégat selon la revendication 6 caractérisé par une racle supérieure (12) qui forme une prolongation solide vers le bas pour loger un crochet culbuteur ou en forme de fourche.

13. Agrégat selon la revendication 1 caractérisé par des plaques de glissement (15) placées latéralement, de manière élastique dans le châssis porteur (2).
